# EUROPEAN PATENT APPLICATION

(11) **EP 4 575 181 A1**
(43) Date of publication of application: **25.06.2025**
(21) Application number: 24213831.1
(22) Date of filing: 19.11.2024
(51) Int. Cl.: F01D 5/02, F01D 25/00, F16D 1/072, F16C 3/02, F16D 1/10

(54) **HYBRID TRANSMISSION COMPONENT FOR A GAS TURBINE ENGINE**

(30) Priority: 19.12.2023 GB 202319474
(71) Applicant: Rolls-Royce plc, London N1 9FX (GB)
(72) Inventor: Adkins, Russell M, Derby, DE24 8BJ (GB); Spruce, Mark, Derby, DE24 8BJ (GB); Jones, Christopher D, Derby, DE24 8BJ (GB); Greaves, Richard, Derby, DE24 8BJ (GB)
(74) Representative: Rolls-Royce plc

(57) **Abstract**

A hybrid transmission component (100, 200, 300, 350, 400, 500, 600) for a gas turbine engine (10) has a composite body (102, 402, 502, 602), and a metallic coupling (104, 304, 354, 404, 504, 604) joined with the composite body (102, 402, 502, 602) and defining a longitudinal axis (106) along its length. The metallic coupling (104, 304, 354, 404, 504, 604) includes a plurality of spline teeth (120) extending from a circumferential surface (114) and angularly separated from each other about the longitudinal axis (106). Each spline tooth (120) from the plurality of spline teeth (120) extends radially from a root (122) to a tip (124) with respect to the longitudinal axis (106) and extends axially from the leading end (126) along the longitudinal axis (106). The leading end (126) of each spline tooth (120) includes a curved surface (128) extending from the root (122) and a planar surface (130) extending from the curved surface (128) to the tip (124). The planar surface (130) is inclined obliquely to the longitudinal axis (106) by a rake angle (α).

## Description

### FIELD

The present invention relates to a hybrid transmission component for a gas turbine engine.

### BACKGROUND

Use of a splined interface between a metallic coupling and a composite body is common in the design of hybrid composite/metallic driveline products e.g., hybrid drive shafts, gears, and transmission components. In a gas turbine, such transmission components transmit a torque between one or more components. For example, a mainline shaft may transmit torque between a fan and a turbine of the gas turbine engine. The mainline shaft may be subjected to various types of loads during operation of the gas turbine engine. For example, the mainline shaft may be subjected to a limit load that may include the highest load that could be generated during normal operation of the gas turbine engine. Further, the mainline shaft may be subjected to an ultimate load that may include a maximum load that could be generated during a fan blade off event or a fan seizure event, which may result in an increase in the application of high amounts of torque and bending load.

In hybrid transmission components, the metallic coupling may contain a male or a female spline toothed arrangement. In both cases, roots of the splined teeth are in interference fit at a joint with the composite body, with the spline teeth cutting into a surface of the composite body. Load carrying capability, fatigue properties, and any deformation of the area around the joint of the metallic coupling and the composite body are dependent upon a level of interface pressure at the joint between the metallic coupling and the composite body. The interface pressure is primarily driven by the designed level of interference fit, however, variables within manufacturing and assembly processes may cause the actual interface pressure to be unpredictable.

For gas turbine engines in aerospace applications, load intensity is significantly higher resulting in larger diameter, longer interfaces with more spline teeth, and the higher interface pressures. The manufacturing variation may be magnified by the larger scale interfaces. This may result in an unacceptably high level of variation in the mechanical behaviour of the component (i.e., the hybrid transmission component).

Generally, a design or geometry of the spline teeth is such that a leading end (cutting end) of each spline tooth from the spline teeth is adapted to engage with and centralise the composite body prior to engagement of the leading end of each spline tooth with a face of the composite body to begin the cut. One of the limitations of conventional designs of the metallic coupling is that a design of the leading end of each spline tooth results in an inefficient cutting action as the spline teeth cuts into the composite body.

In such conventionally designed metallic couplings, the leading end may cause debris generated by cutting of the composite body to be pushed to the interface rather than ejecting it from the interface. Moreover, an angle of the cutting face (i.e., leading end) directs the cutting force away from the surface of the composite body, thereby acting to shear and lift out the debris from the cut. The debris may get trapped within the interface thereby increasing the effective interface pressure and causing excessive wear on the leading (cutting) end of the spline teeth. In other words, the debris trapped within the interface may increase variation in the interface pressure which may further cause excessive wear on the leading (cutting) end of the spline teeth. In some cases, the debris from the composite body as well as abraded metallic from the worn metallic coupling are pulled into the interface thereby adding to the interface pressure by clogging the interface and by reducing cutting efficiency of the spline teeth.

Therefore, there is a need for an improved hybrid transmission component which may overcome the above-mentioned limitations.

### SUMMARY

In a first aspect, a hybrid transmission component for a gas turbine engine is provided. The hybrid transmission component includes a composite body and a metallic coupling joined with the composite body and defining a longitudinal axis along its length. The metallic coupling includes an axial end surface, a circumferential surface circumferentially extending about the longitudinal axis, and a plurality of spline teeth extending from the circumferential surface and angularly separated from each other about the longitudinal axis. Each spline tooth from the plurality of spline teeth includes a root disposed adjacent to the circumferential surface, a tip distal to the circumferential surface, and a leading end disposed proximal to the axial end surface. Each spline tooth extends radially from the root to the tip with respect to the longitudinal axis. Each spline tooth extends axially from the leading end along the longitudinal axis. The leading end of each spline tooth includes a curved surface extending from the root and a planar surface extending from the curved surface to the tip. The curved surface curves inwardly from the root away from the axial end surface, such that the curved surface is concave with respect to the axial end surface. The planar surface is inclined obliquely to the longitudinal axis by a rake angle. During joining of the composite body with the metallic coupling, the composite body is moved relative to the metallic coupling in a joining direction that extends away from the axial end surface along the longitudinal axis. The leading end of each spline tooth is configured to cut the composite body during joining of the composite body with the metallic coupling. The hybrid transmission component may be a hybrid shaft or a hybrid gear.

Due to inclusion of the curved surface and the planar surface in the leading end of each spline tooth, a shape and geometry of the leading end of each spline tooth is optimised so as to ensure free ejection of debris (generated by cutting of the composite body) out of an interface between the spline tooth and the composite body. The proposed geometry of the leading end of each spline tooth shears and lifts the debris out of the interface that could otherwise increase an effective interface pressure and cause excessive wear on the leading end of the spline teeth. As the debris is not trapped within the interface, there is minimal variation in interface pressure thereby improving the load carrying capability and fatigue properties of the area around the joint of the metallic coupling and the composite body. This may also reduce any deformation near the interface which may further minimize any variations in the mechanical behaviour of the hybrid transmission component of the present invention. Moreover, the geometry and shape of the leading end of each spline tooth is selected so as to centralise the composite body before the leading end of each spline tooth engages with a face of the composite body to begin the cut.

In some embodiments, the curved surface is a circular arc having a transition radius. The curved surface in the form of the circular arc with the transition radius may provide the leading end of each spline tooth with the optimised geometry so as to minimize variations in the interface pressure between the spline teeth of the metallic coupling and the composite body.

In some embodiments, the metallic coupling further includes a chamfered surface extending between the axial end surface and the circumferential surface, such that the curved surface of the leading end of each spline tooth extends from the chamfered surface. The chamfered surface is inclined obliquely to the longitudinal axis by a lead angle. This inclination of the chamfered surface to the longitudinal axis may contribute to centralise the composite body before the leading end of each spline tooth engages with the face of the composite body to begin the cut. In other words, the inclination of the chamfered surface to the longitudinal axis may improve centralisation of the mating parts (i.e., the metallic coupling and the composite body) during assembly of the hybrid transmission component.

In some embodiments, the lead angle is from 30 degrees to 45 degrees. In some applications, the lead angle of about 30 degrees may be an ideal inclination of the chamfered surface to the longitudinal axis for desirable centring the mating parts. The lead angle of about 45 degrees may be suitable for applications where the spline teeth are deeper and therefore generate a larger quantity of composite debris. Further, higher values (about 45 degrees) of the lead angle may provide less restriction to the ejection of the debris from the composite body.

In some embodiments, the rake angle is from 55 degrees to 85 degrees. Such a range of the rake angle may ensure that the leading end of each spline tooth directs a cutting force away from the composite body acting to shear and lift out the debris from the interface. The rake angle may be selected based on cutting characteristics of a material of the composite body. For reduced shear length and lower press fitting loads, the rake angle may be from 55 degrees to 64 degrees. For braided composite body with a high tensile strength and for requirement of a stronger spline tooth, the rake angle may be from 76 degrees to 85 degrees.

In some embodiments, each spline tooth tapers from the root to the tip. The tapered profile of each spline tooth from the root to the tip may enhance cutting of a surface of the composite body by the spline teeth.

In some embodiments, the root of each spline tooth forms an interference fit with the composite body. In other words, during joining of the composite body and the metallic coupling, the root of each spline tooth forms the interference fit with the composite body, with each spline tooth cutting into the surface of the composite body.

In some embodiments, the metallic coupling further includes a main body forming the circumferential surface and the axial end surface, such that each spline tooth is disposed on the main body. Each spline tooth at least partially defines at least one groove that extends from the tip of the spline tooth, beyond the root of the spline tooth, into the main body of the metallic coupling.

Each of the at least one groove may act as a new cutting edge/end for cutting the composite body. Further, the at least one groove may serve to clean out and recut the composite body as the composite body is inserted past the at least one groove. Therefore, this recutting action provided by the at least one groove may enhance the reduction of the variation in the interface pressure between the spline teeth of the metallic coupling and the composite body. Moreover, extension of the at least one groove of each spline tooth beyond the corresponding root may form a cavity within the main body of the metallic coupling and such cavity may act as a container or a storage space for collection of debris during insertion of the composite body along the joining direction. This may prevent the debris from being recirculated into the interface.

In some embodiments, the at least one groove includes a plurality of grooves axially spaced apart from each other with respect to the longitudinal axis. The plurality of grooves defined on each spline tooth of the metallic coupling may be advantageous for applications where there is a need of a lot of recutting of the composite body as the composite body is inserted along the joining direction in order to be joined with the metallic coupling.

In some embodiments, an axial distance between adjacent grooves from the plurality of grooves along the longitudinal axis progressively increases along the joining direction. This may be advantageous so as to balance the interface pressure because the wear of each spline tooth would be higher on the grooves positioned closer to the leading end.

In some embodiments, each spline tooth includes at least one spline groove that extends from the tip of the spline tooth to the root of the spline tooth. The composite body includes at least one body groove that is aligned with the spline groove of each spline tooth after the composite body is joined with the metallic coupling. The inclusion of the at least one body groove in addition to the at least one spline groove may be advantageous in cases where the debris generated during joining of the metallic coupling and the composite body could end up entering into the interface between the spline tooth and the composite body. During assembly of the metallic spline and the composite body, as the at least one body groove is aligned with the spline groove of each spline tooth, the at least one body groove acts as a container or a storage space for debris which was pushed down into the interface by cutting action of each spline tooth.

In some embodiments, the at least one spline groove includes a plurality of spline grooves axially spaced apart from each other with respect to the longitudinal axis. The at least one body groove includes a plurality of body grooves corresponding to the plurality of spline grooves. Each body groove is aligned with a corresponding spline groove from the plurality of body grooves after the composite body is joined with the metallic coupling. The plurality of body grooves and the corresponding plurality of spline grooves may be advantageous for applications where there is a need of a lot of recutting of the composite body as the composite body is inserted along the joining direction in order to be joined with the metallic coupling. During assembly of the metallic spline and the composite body, as each body groove is aligned with the corresponding spline groove after the composite body is joined with the metallic coupling, each body groove acts as a container or a storage space for debris which was pushed down into the interface by cutting action of each spline tooth.

In some embodiments, an axial distance between adjacent spline grooves from the plurality of spline grooves along the longitudinal axis progressively increases along the joining direction. This may be advantageous so as to balance the interface pressure because the wear of each spline tooth would be higher on the spline grooves positioned closer to the leading end.

In some embodiments, the metallic coupling further includes an overhang portion axially extending from the axial end surface along the longitudinal axis opposite to the joining direction. The overhang portion includes an overhang end surface distal to the axial end surface. Each spline tooth extends axially along the overhang portion, such that the leading end of each spline tooth is disposed adjacent to the overhang end surface. The overhang portion increases a length of the metallic coupling in the direction opposite to the joining direction. During joining of the metallic coupling and the composite body, maximum wear is observed in an initial 5% of the length of each spline tooth, when viewed from the leading end of each spline tooth. The overhang portion may remove any interference fit from the maximum worn portion of the metallic coupling thereby avoiding any local increase in the interface pressure between the metallic coupling and the composite body. In some cases, the overhang portion may be machined away or removed after joining of the composite body and the metallic coupling.

In some embodiments, the metallic coupling is annular, such that the circumferential surface is a radially inner circumferential surface of the metallic coupling. The composite body is at least partially received within the radially inner circumferential surface. Therefore, the metallic coupling is a female spline toothed arrangement, and the composite body is a male arrangement. In such applications, the metallic coupling is disposed on an outer diameter of the composite body.

In some embodiments, the circumferential surface is an outer circumferential surface of the metallic coupling. The composite body is at least partially received on the outer circumferential surface. Therefore, the metallic coupling is a male spline toothed arrangement, and the composite body is a female arrangement. In such applications, the metallic coupling is disposed in a bore of the composite body to assemble the hybrid transmission component.

In a second aspect a gas turbine that includes the hybrid transmission component of the first aspect is provided.

Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present invention may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed). The gearbox may be a reduction gearbox (in that the output to the fan is a lower rotational rate than the input from the core shaft). Any type of gearbox may be used.

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. The bypass duct may be substantially annular. The bypass duct may be radially outside the engine core. The radially outer surface of the bypass duct may be defined by a nacelle and/or a fan case.

Specific thrust of an engine may be defined as the net thrust of the engine divided by the total mass flow through the engine. At cruise conditions, the specific thrust of an engine described and/or claimed herein may be less than (or in the order of) any of the following: 110 Nkg-1s, 105 Nkg-1s, 100 Nkg-1s, 95 Nkg-1s, 90 Nkg-1s, 85 Nkg-1s or 80 Nkg-1s. The specific thrust may be in an inclusive range bounded by any two of the values in the previous sentence (i.e., the values may form upper or lower bounds), for example in the range of from 80 Nkg-1s to 100 Nkg-1s, or 85 Nkg-1s to 95 Nkg-1s. Such engines may be particularly efficient in comparison with conventional gas turbine engines.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre.

The fan of a gas turbine as described and/or claimed herein may have any desired number of fan blades, for example 14, 16, 18, 20, 22, 24 or 26 fan blades.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**FIG. 1** is a schematic sectional side view of a gas turbine engine;
**FIG. 2A** is a partial sectional exploded view of a hybrid transmission component for the gas turbine engine of FIG. 1;
**FIG. 2B** is a partial sectional view of the hybrid transmission component of FIG. 2A, illustrating a joining of a composite body of the hybrid transmission component with a metallic coupling of the hybrid transmission component;
**FIG. 3** is a partial perspective side view of the metallic coupling of the hybrid transmission component of FIGS. 2A and 2B;
**FIG. 4** is a zoomed-in sectional view of a portion of the metallic coupling of FIG. 3;
**FIG. 5** is a partial sectional view of a hybrid transmission component for the gas turbine engine of FIG. 1;
**FIG. 6** is a partial sectional view of a hybrid transmission component for the gas turbine engine of FIG. 1;
**FIG. 7** is a partial sectional view of a hybrid transmission component for the gas turbine engine of FIG. 1;
**FIG. 8** is a partial sectional view of a hybrid transmission component for the gas turbine engine of FIG. 1;
**FIG. 9** is a partial sectional view of a hybrid transmission component for the gas turbine engine of FIG. 1; and
**FIG. 10** is a partial exploded view of a hybrid transmission component for the gas turbine engine of FIG. 1.

The following table lists the reference numerals used in the drawings with the features to which they refer:

| Ref no. | Feature | Figure |
|---|---|---|
| 9 | Principal rotational axis | 1 |
| 10 | Gas turbine engine | 1 |
| 11 | Core | 1 |
| 12 | Air intake | 1 |
| 14 | Low pressure compressor | 1 |
| 15 | High pressure compressor | 1 |
| 16 | Combustion equipment | 1 |
| 17 | High pressure turbine | 1 |
| 18 | Bypass exhaust nozzle | 1 |
| 19 | Low pressure turbine | 1 |
| 20 | Core exhaust nozzle | 1 |
| 21 | Nacelle | 1 |
| 22 | Bypass duct | 1 |
| 23 | Propulsive fan | 1 |
| 26 | Shaft | 1 |
| 27 | Interconnecting shaft | 1 |
| 30 | Epicyclic gearbox | 1 |
| 100 | Hybrid transmission component | 2A 2B |
| 102 | Composite body | 2A 2B 5 6 7 |
| 104 | Metallic coupling | 2A 2B 3 4 5 |
| 106 | Longitudinal axis | 2A 2B 3 4 5 6 7 8 9 10 |
| 108 | Joining direction | 2A 2B 5 6 7 8 9 10 |
| 110 | Main body | 2A 2B 3 4 5 6 7 8 9 10 |
| 112 | Axial end surface | 2A 2B 3 4 5 6 7 8 10 |
| 114 | Circumferential surface | 3 10 |
| 114i | Inner circumferential surface | 3 |
| 114o | Outer circumferential surface | 10 |
| 116 | Face | 2A 2B 5 6 |
| 120 | Spline tooth | 2A 2B 3 4 5 6 7 8 9 10 |
| 122 | Root | 2A 2B 4 5 6 7 8 9 |
| 124 | Tip | 2A 2B 4 5 6 7 8 9 |
| 126 | Leading end | 2A 2B 4 5 6 7 8 9 |
| 128 | Curved surface | 4 |
| 130 | Planar surface | 4 |
| 132 | Chamfered surface | 4 |
| 150 | Interface | 2B |
| 200 | Hybrid transmission component | 5 |
| 202 | Overhang portion | 5 |
| 204 | Overhang end surface | 5 |
| 300 | Hybrid transmission component | 6 |
| 304 | Metallic coupling | 6 |
| 305 | Groove | 6 7 |
| 350 | Hybrid transmission component | 7 |
| 354 | Metallic coupling | 7 |
| 400 | Hybrid transmission component | 8 |
| 402 | Composite body | 8 |
| 404 | Metallic coupling | 8 |
| 405 | Spline groove | 8 9 |
| 410 | Body groove | 8 9 |
| 500 | Hybrid transmission component | 9 |
| 502 | Composite body | 9 |
| 504 | Metallic coupling | 9 |
| 600 | Hybrid transmission component | 10 |
| 602 | Composite body | 10 |
| 604 | Metallic coupling | 10 |
| 610 | Bore | 10 |
| A | Core air flow | 1 |
| A1 | Circular arc | 4 |
| α | Rake angle | 4 |
| B | Bypass air flow | 1 |
| β | Lead angle | 4 |
| D1 | Axial distance | 7 |
| D2 | Axial distance | 9 |
| R | Transition radius | 4 |

### DETAILED DESCRIPTION

Aspects and embodiments of the present invention will now be discussed with reference to the accompanying Figures. Further aspects and embodiments will be apparent to those skilled in the art.

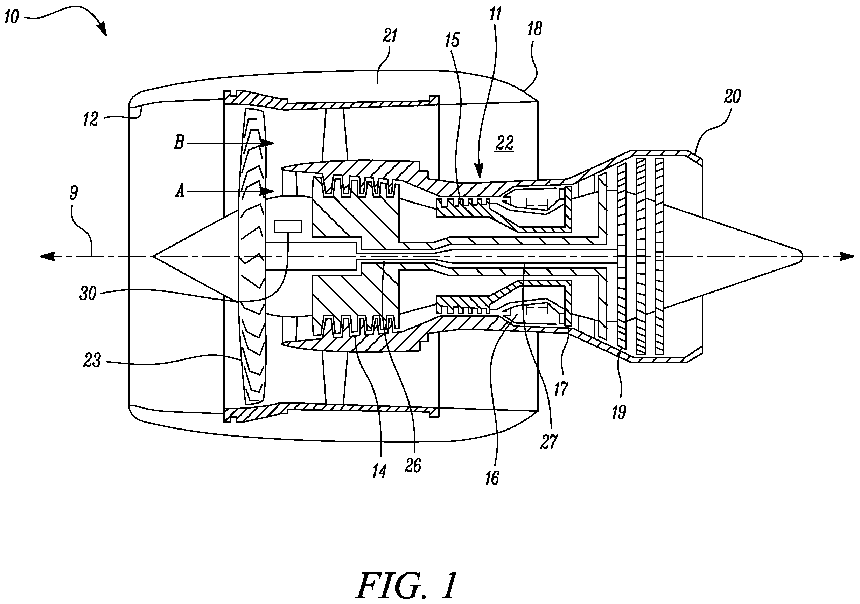

**FIG. 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises an engine core 11 that receives the core airflow A. The engine core 11 comprises, in axial flow series, a low pressure compressor 14, a high pressure compressor 15, a combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine 10 (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present invention may be applied may have alternative configurations. For example, such engines may have an alternative number of compressors and/or turbines and/or an alternative number of interconnecting shafts. By way of further example, the gas turbine engine shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present invention may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the invention may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial, and circumferential directions are mutually perpendicular.

In addition, the present invention is equally applicable to aero gas turbine engines, marine gas turbine engines, and land-based gas turbine engines.

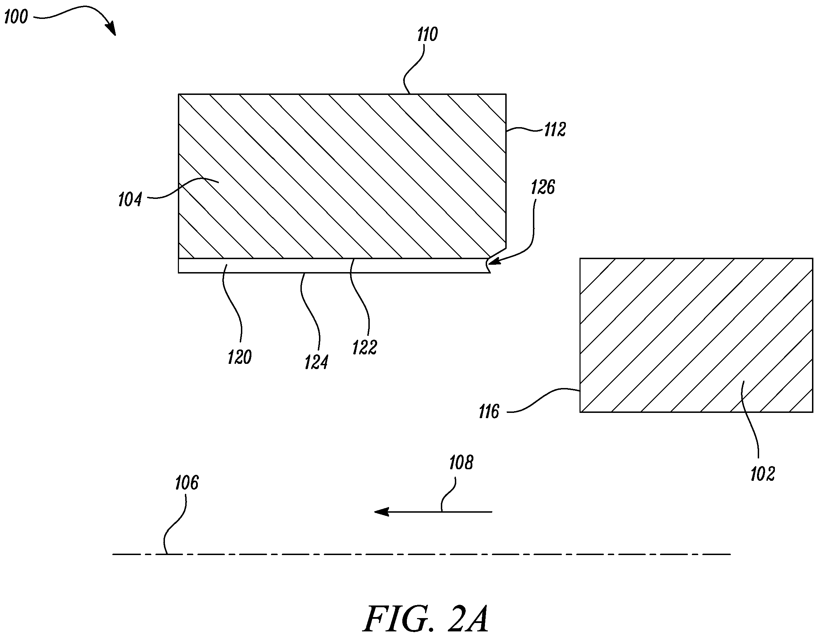

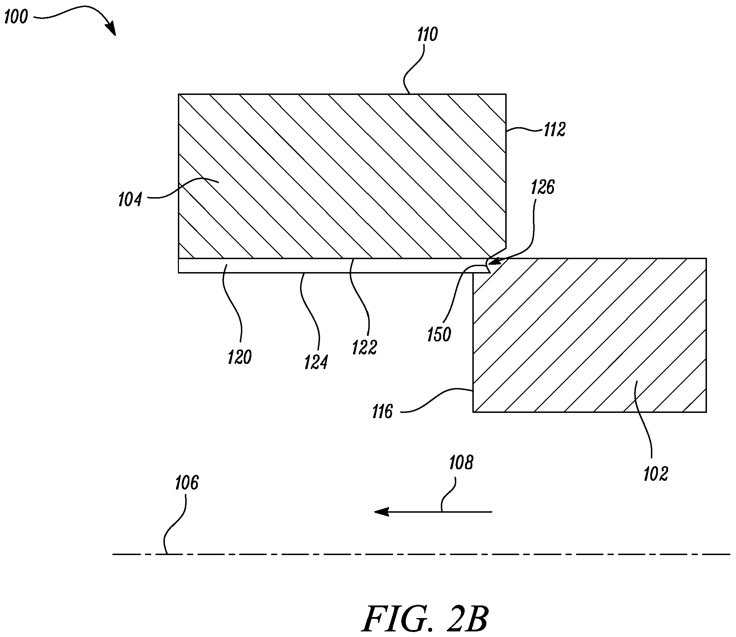

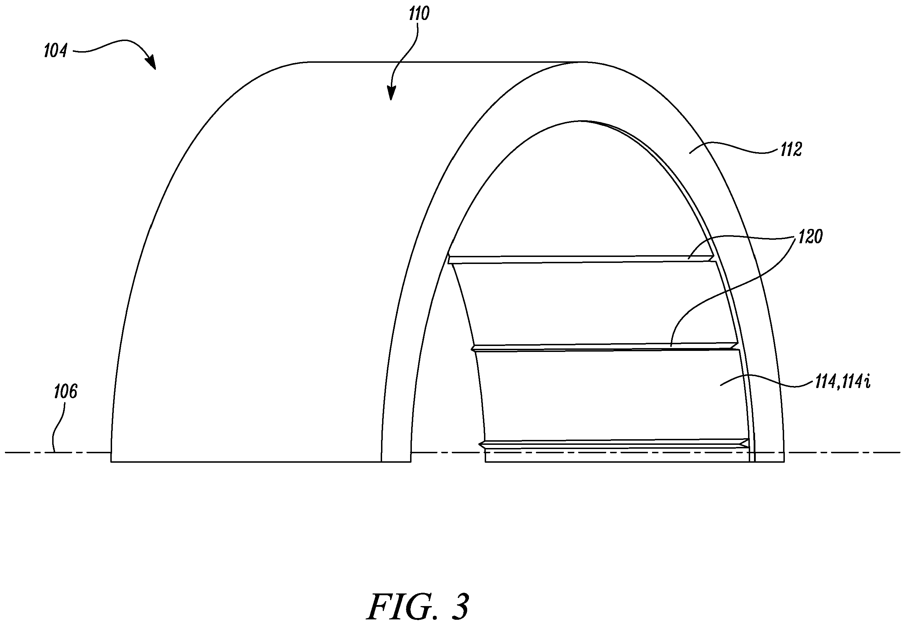

**FIG. 2A** shows a partial sectional exploded view of a hybrid transmission component 100 for the gas turbine engine 10 (shown in FIG. 1), according to an embodiment of the present invention. **FIG. 2B** shows a partial sectional view of the hybrid transmission component 100, illustrating a joining of a composite body 102 of the hybrid transmission component 100 with a metallic coupling 104 of the hybrid transmission component 100. **FIG. 3** shows a partial perspective side view of the metallic coupling 104 of the hybrid transmission component 100.

It should be noted that the hybrid transmission component 100 described herein is not limited to use in geared engines, such as the gas turbine engine 10 having the gearbox 30. Accordingly, the hybrid transmission component 100 can be used in direct drive engines that do not include the gearbox 30.

Referring to FIGS. 2A, 2B and 3, the hybrid transmission component 100 includes the composite body 102 and the metallic coupling 104 joined with the composite body 102. The hybrid transmission component 100 may be a hybrid shaft or a hybrid gear. The composite body 102 may be a tube of composite material. The metallic coupling 104 defines a longitudinal axis 106 along its length. The metallic coupling 104 includes an axial end surface 112, a circumferential surface 114 (shown in FIG. 3) circumferentially extending about the longitudinal axis 106, and a plurality of spline teeth 120 extending from the circumferential surface 114 and angularly separated from each other about the longitudinal axis 106. The metallic coupling 104 further includes a main body 110 forming the circumferential surface 114 and the axial end surface 112, such that each spline tooth 120 from the plurality of spline teeth 120 is disposed on the main body 110.

In the illustrated embodiment of FIGS. 2A, 2B, and 3, the metallic coupling 104 is annular, such that the circumferential surface 114 is a radially inner circumferential surface 114i of the metallic coupling 104. The composite body 102 is at least partially received within the radially inner circumferential surface 114i Therefore, the arrangement may be done in such a way that the metallic coupling 104 is a female part, and the composite body 102 is a male part. In such applications, the metallic coupling 104 is disposed on an outer diameter of the composite body 102.

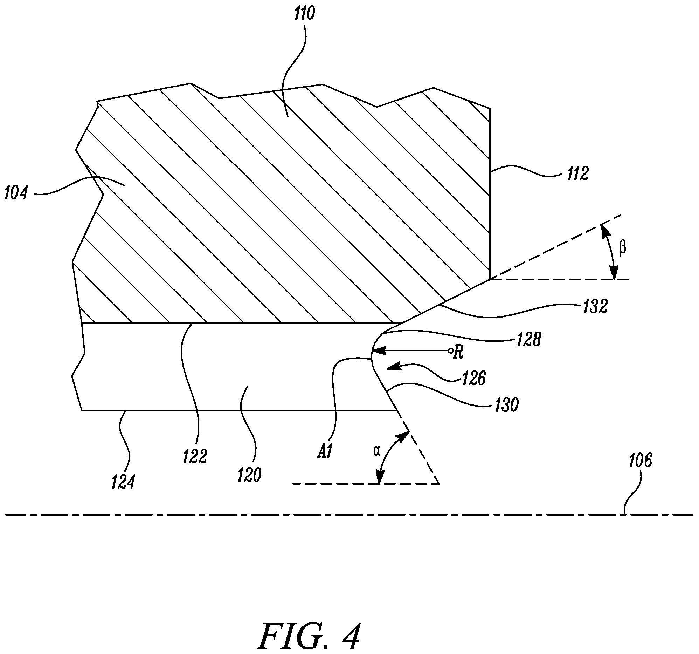

**FIG. 4** is a zoomed-in sectional view of a portion of the metallic coupling 104. Referring to FIGS. 2A to 4, each spline tooth 120 from the plurality of spline teeth 120 includes a root 122 disposed adjacent to the circumferential surface 114, a tip 124 distal to the circumferential surface 114, and a leading end 126 disposed proximal to the axial end surface 112. Each spline tooth 120 extends radially from the root 122 to the tip 124 with respect to the longitudinal axis 106. Each spline tooth 120 extends axially from the leading end 126 along the longitudinal axis 106.

Further, during joining of the composite body 102 with the metallic coupling 104, the composite body 102 is moved relative to the metallic coupling 104 in a joining direction 108 that extends away from the axial end surface 112 along the longitudinal axis 106. The leading end 126 of each spline tooth 120 is configured to cut the composite body 102 during joining of the composite body 102 with the metallic coupling 104. Further, during joining of the composite body 102 with the metallic coupling 104, the leading end 126 of each spline tooth 120 may engage with a face 116 of the composite body 102 at an interface 150.

In some embodiments, the root 122 of each spline tooth 120 forms an interference fit with the composite body 102. In other words, during joining of the composite body 102 and the metallic coupling 104, the root 122 of each spline tooth 120 forms the interference fit with the composite body 102, with each spline tooth 120 cutting into the surface of the composite body 102.

The leading end 126 of each spline tooth 120 includes a curved surface 128 (shown in FIG. 4) extending from the root 122 and a planar surface 130 (shown in FIG. 4) extending from the curved surface 128 to the tip 124. The curved surface 128 curves inwardly from the root 122 away from the axial end surface 112, such that the curved surface 128 is concave with respect to the axial end surface 112. The planar surface 130 is inclined obliquely to the longitudinal axis 106 by a rake angle α.

Due to inclusion of the curved surface 128 and the planar surface 130 in the leading end 126 of each spline tooth 120, a shape and geometry of the leading end 126 of each spline tooth 120 is optimised so as to ensure free ejection of debris (generated by cutting of the composite body 102) out of the interface 150 between the spline tooth 120 and the composite body 102. The term "debris" may refer to the material removed from the composite body 102 during joining of the composite body 102 and the metallic coupling 104.

The proposed geometry of the leading end 126 of each spline tooth 120 shears and lifts the debris out of the interface 150 that could otherwise increase an effective interface pressure and cause excessive wear on the leading end 126 of the spline teeth 120. As the debris is not trapped within the interface 150, there is minimal variation in interface pressure thereby improving the load carrying capability and fatigue properties of the area around the joint of the metallic coupling 104 and the composite body 102. This may also reduce any deformation near the interface 150 which may further minimize any variations in the mechanical behaviour of the hybrid transmission component 100. Moreover, the geometry and shape of the leading end 126 of each spline tooth 120 is selected so as to centralise the composite body 102 before the leading end 126 end of each spline tooth 120 engages with the face 116 of the composite body 102 to begin the cut.

In some embodiments, the rake angle α is from 55 degrees to 85 degrees. Such a range of the rake angle α may ensure that the leading end 126 of each spline tooth 120 directs a cutting force away from the composite body 102 acting to shear and lift out the debris from the interface 150. The rake angle α may be selected based on cutting characteristics of a material of the composite body 102. For reduced shear length and lower press fitting loads, the rake angle α may be from 55 degrees to 64 degrees. For braided composite body 102 with a high tensile strength and for requirement of a stronger spline tooth 120, the rake angle α may be from 76 degrees to 85 degrees.

In some embodiments, the metallic coupling 104 further includes a chamfered surface 132 (shown in FIG. 4) extending between the axial end surface 112 and the circumferential surface 114, such that the curved surface 128 of the leading end 126 of each spline tooth 120 extends from the chamfered surface 132. The chamfered surface 132 is inclined obliquely to the longitudinal axis 106 by a lead angle β. This inclination of the chamfered surface 132 to the longitudinal axis 106 may contribute to centralise the composite body 102 before the leading end 126 of each spline tooth 120 engages with the face 116 of the composite body 102 to begin the cut. In other words, the inclination of the chamfered surface 132 to the longitudinal axis 106 may improve centralisation of the mating parts (i.e., the metallic coupling 104 and the composite body 102) during assembly of the hybrid transmission component 100.

In some embodiments, the lead angle β is from 30 degrees to 45 degrees. In some applications, the lead angle β of about 30 degrees may be an ideal inclination of the chamfered surface 132 to the longitudinal axis 106 for desirable centring the mating parts. The lead angle β of about 45 degrees may be suitable for applications where the spline teeth 120 are deeper and therefore generate a larger quantity of debris from the composite body 102. Further, higher values (about 45 degrees) of the lead angle β may provide less restriction to the ejection of the debris from the composite body 102.

In some embodiments, the curved surface 128 is a circular arc A1 having a transition radius R. The curved surface 128 in the form of the circular arc A1 with the transition radius R may provide the leading end 126 of each spline tooth 120 with the optimized geometry so as to minimize variations in the interface pressure between the spline teeth 120 of the metallic coupling 104 and the composite body 102.

In some embodiments, each spline tooth 120 tapers from the root 122 to the tip 124. The tapered profile of each spline tooth 120 from the root 122 to the tip 124 may enhance cutting of a surface of the composite body 102 by the spline teeth 120.

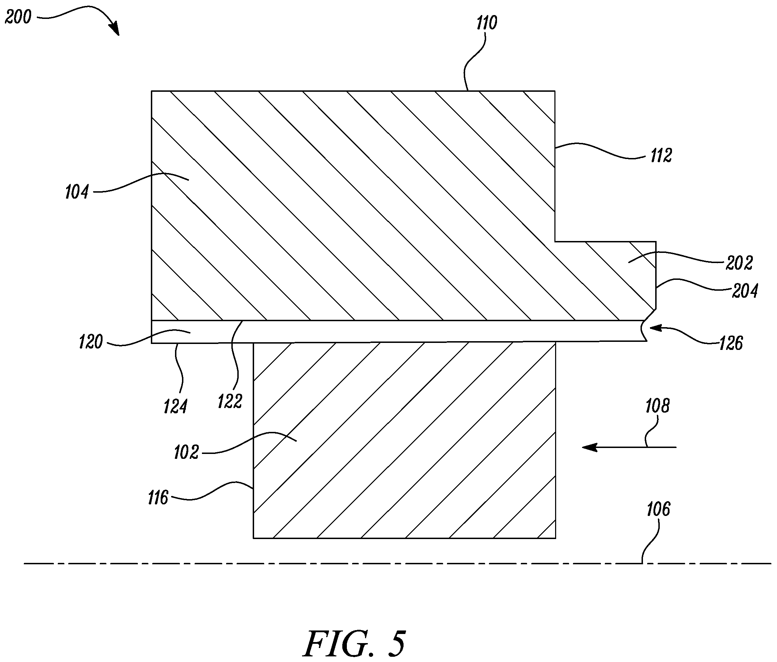

**FIG. 5** is a partial sectional view of a hybrid transmission component 200 for the gas turbine engine 10 of FIG. 1, according to another embodiment of the present invention. The hybrid transmission component 200 is substantially similar to the hybrid transmission component 100 of FIGS. 2A and 2B, with common components being referred to by the same numerals. However, in the hybrid transmission component 200 of FIG. 5, the metallic coupling 104 further includes an overhang portion 202 axially extending from the axial end surface 112 along the longitudinal axis 106 opposite to the joining direction 108. The overhang portion 202 includes an overhang end surface 204 distal to the axial end surface 112. Each spline tooth 120 extends axially along the overhang portion 202, such that the leading end 126 of each spline tooth 120 is disposed adjacent to the overhang end surface 204.

The overhang portion 202 increases a length of the metallic coupling 104 in the direction opposite to the joining direction 108. During joining of the metallic coupling 104 and the composite body 102, maximum wear may be observed in an initial 5% of the length of each spline tooth 120, when viewed from the leading end 126 of each spline tooth 120. The overhang portion 202 may remove any interference fit from the maximum worn portion of the metallic coupling 104 thereby avoiding any local increase in the interface pressure between the metallic coupling 104 and the composite body 102. In some cases, the overhang portion 202 may be machined away or removed after joining of the composite body 102 and the metallic coupling 104.

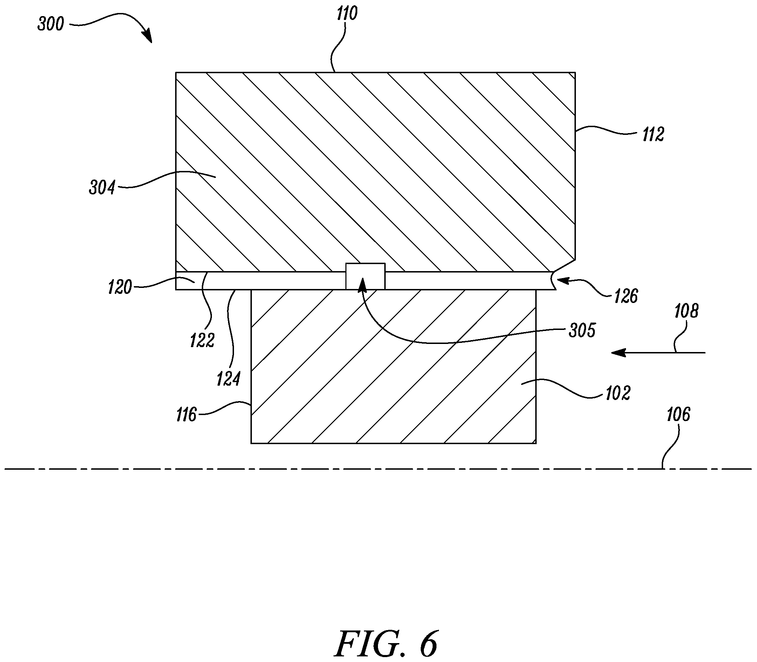

**FIG. 6** is a partial sectional view of a hybrid transmission component 300 for the gas turbine engine 10 of FIG. 1, according to another embodiment of the present invention. The hybrid transmission component 300 is substantially similar to the hybrid transmission component 100 of FIGS. 2A and 2B, with common components being referred to by the same numerals. The hybrid transmission component 300 includes a metallic coupling 304 (instead of the metallic coupling 104 shown in FIG. 2A). The metallic coupling 304 is substantially similar to the metallic coupling 104 shown in FIG. 2A.

However, in the metallic coupling 304 of the hybrid transmission component 300, each spline tooth 120 at least partially defines at least one groove 305 that extends from the tip 124 of the spline tooth 120, beyond the root 122 of the spline tooth 120, into the main body 110 of the metallic coupling 304.

Each of the at least one groove 305 may act as a new cutting edge/end for cutting the composite body 102. Further, the at least one groove 305 may serve to clean out and recut the composite body 102 as the composite body 102 is inserted past the at least one groove 305. Therefore, this recutting action provided by the at least one groove 305 may enhance the reduction of the variation in the interface pressure between the spline teeth 120 of the metallic coupling 304 and the composite body 102. Moreover, extension of the at least one groove 305 of each spline tooth 120 beyond the corresponding root 122 may form a cavity within the main body 110 of the metallic coupling 304 and such cavity may act as a container or a storage space for collection of debris during insertion of the composite body 102 along the joining direction 108. This may prevent the debris from being recirculated into an interface (e.g., the interface 150 shown in FIG. 2B) between the spline tooth 120 and the composite body 102.

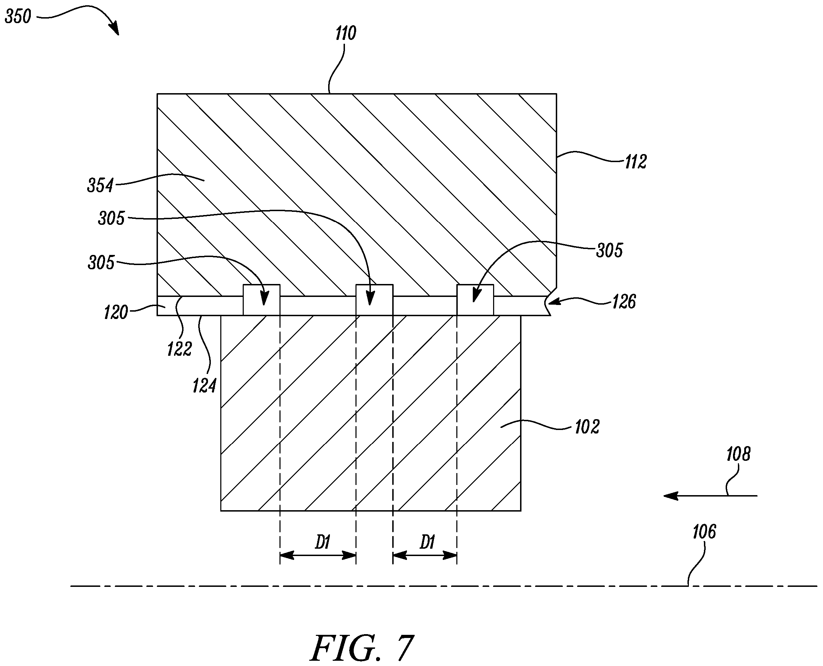

**FIG. 7** is a partial sectional view of a hybrid transmission component 350 for the gas turbine engine 10 of FIG. 1, according to another embodiment of the present invention. The hybrid transmission component 350 is substantially similar to the hybrid transmission component 300 of FIG. 6, with common components being referred to by the same numerals. The hybrid transmission component 350 includes a metallic coupling 354 (instead of the metallic coupling 304 shown in FIG. 6). The metallic coupling 354 is substantially similar to the metallic coupling 304 shown in FIG. 6. However, in the metallic coupling 354 of the hybrid transmission component 350, the at least one groove 305 includes a plurality of grooves 305 axially spaced apart from each other with respect to the longitudinal axis 106. In the illustrated embodiment of FIG. 7, the plurality of grooves 305 includes three grooves 305 in total. However, the plurality of grooves 305 may include more than three grooves 305 in total. The plurality of grooves 305 defined on each spline tooth 120 of the metallic coupling 354 may be advantageous for applications where there is a need of lot of recutting of the composite body 102 as the composite body 102 is inserted along the joining direction 108 in order to be joined with the metallic coupling 354.

In some embodiments, an axial distance D1 between adjacent grooves 305 from the plurality of grooves 305 along the longitudinal axis 106 progressively increases along the joining direction 108. This may be advantageous so as to balance the interface pressure because the wear of each spline tooth 120 would be higher on the grooves 305 positioned closer to the leading end 126.

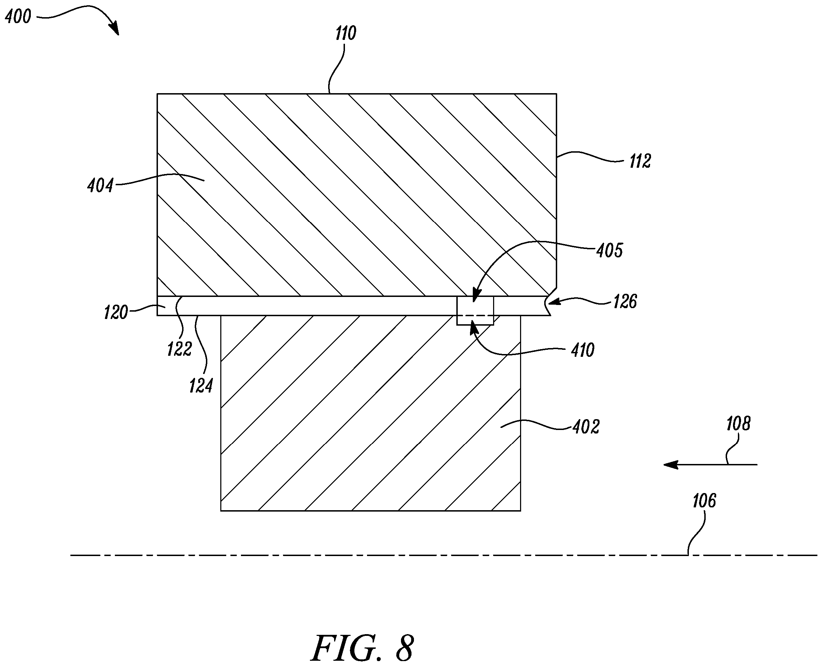

**FIG. 8** is a partial sectional view of a hybrid transmission component 400 for the gas turbine engine 10 of FIG. 1, according to another embodiment of the present invention. The hybrid transmission component 400 is substantially similar to the hybrid transmission component 100 of FIGS. 2A and 2B, with common components being referred to by the same numerals. However, the hybrid transmission component 400 includes a metallic coupling 404 (instead of the metallic coupling 104 shown in FIGS. 2A and 2B) and a composite body 402 (instead of the composite body 102 shown in FIGS. 2A and 2B). The metallic coupling 404 is substantially similar to the metallic coupling 104 shown in FIGS. 2A and 2B. Further, the composite body 402 is substantially similar to the composite body 102 shown in FIGS. 2A and 2B.

However, in the metallic coupling 404, each spline tooth 120 includes at least one spline groove 405 that extends from the tip 124 of the spline tooth 120 to the root 122 of the spline tooth 120. The composite body 402 includes at least one body groove 410 that is aligned with the spline groove 405 of each spline tooth 120 after the composite body 402 is joined with the metallic coupling 404.

The inclusion of the at least one body groove 410 in addition to the at least one spline groove 405 may be advantageous in cases where the debris generated during joining of the metallic coupling 404 and the composite body 402 could end up entering into the interface (e.g., the interface 150 shown in FIG. 2B) between the spline tooth 120 and the composite body 402. During assembly of the metallic coupling 404 and the composite body 402, as the at least one body groove 410 is aligned with the spline groove 405 of each spline tooth 120, the at least one body groove 410 acts as a container or a storage space for debris which was pushed down into the interface (e.g., the interface 150 shown in FIG. 2B) by cutting action of each spline tooth 120.

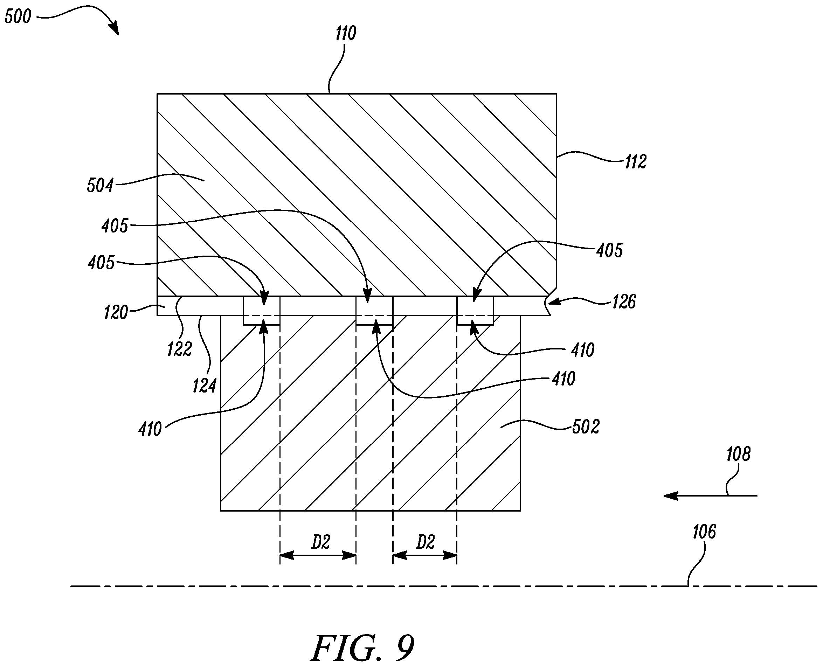

**FIG. 9** is a partial sectional view of a hybrid transmission component 500 for the gas turbine 10 of FIG. 1, according to another embodiment of the present invention. The hybrid transmission component 500 is substantially similar to the hybrid transmission component 400 of FIG. 8, with common components being referred to by the same numerals. However, the hybrid transmission component 500 includes a metallic coupling 504 (instead of the metallic coupling 404 shown in FIG. 8) and a composite body 502 (instead of the composite body 402 shown in FIG. 8). The metallic coupling 504 is substantially similar to the metallic coupling 404 shown in FIG. 8. Further, the composite body 502 is substantially similar to the composite body 402 shown in FIG. 8.

However, in the metallic coupling 504, the at least one spline groove 405 includes a plurality of spline grooves 405 axially spaced apart from each other with respect to the longitudinal axis 106. Moreover, in the composite body 502, the at least one body groove 410 includes a plurality of body grooves 410 corresponding to the plurality of spline grooves 405. In the illustrated embodiment of FIG. 9, the plurality of spline grooves 405 includes three spline grooves 405 in total and the plurality of body grooves 410 includes three body grooves 410 in total. However, the plurality of spline grooves 405 may include more than three spline grooves 405 in total and the plurality of body grooves 410 may include more than three body grooves 410 in total. Each body groove 410 is aligned with a corresponding spline groove 405 from the plurality of spline grooves 405 after the composite body 502 is joined with the metallic coupling 504.

The plurality of body grooves 410 and the corresponding plurality of spline grooves 405 may be advantageous for applications where there is a need of lot of recutting of the composite body 502 as the composite body 502 is inserted along the joining direction 108 in order to be joined with the metallic coupling 504. During assembly of the metallic coupling 504 and the composite body 502, as each body groove 410 is aligned with the corresponding spline groove 405 after the composite body 502 is joined with the metallic coupling 504, each body groove 410 acts as a container or a storage space for debris which was pushed down into the interface by cutting action of each spline tooth 120.

In some embodiments, an axial distance D2 between adjacent spline grooves 405 from the plurality of spline grooves 405 along the longitudinal axis 106 progressively increases along the joining direction 108. This may be advantageous so as to balance the interface pressure because the wear of each spline tooth 120 would be higher on the spline grooves 405 positioned closer to the leading end 126.

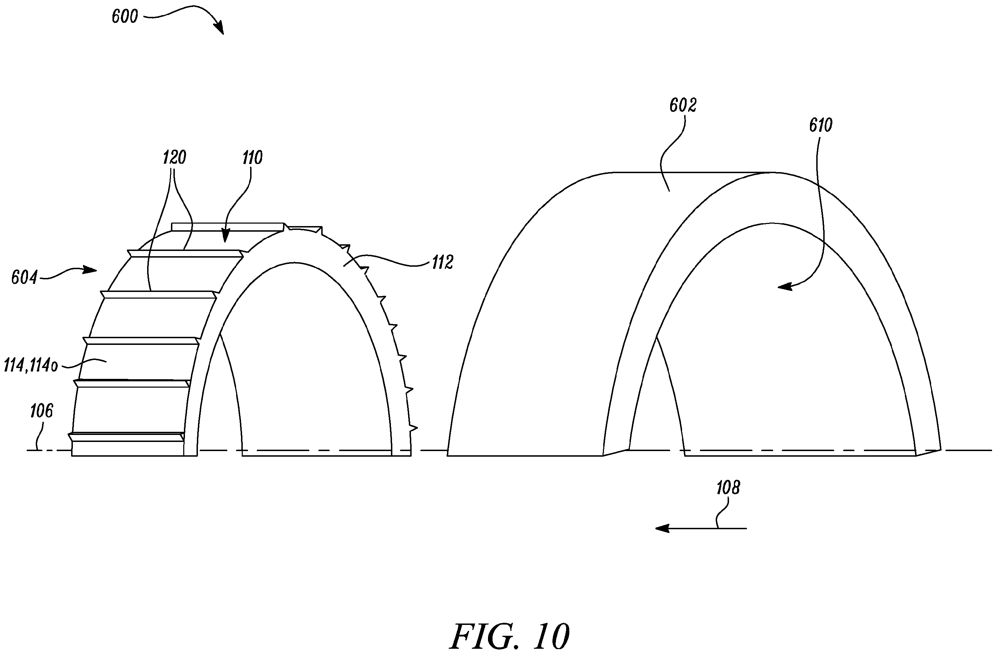

**FIG. 10** is a partial exploded view of a hybrid transmission component 600 for the gas turbine engine 10 of FIG. 1, according to another embodiment of the present invention. The hybrid transmission component 600 is substantially similar to the hybrid transmission component 100 of FIGS. 2A and 2B, with common components being referred to by the same numerals.

However, the hybrid transmission component 600 includes a metallic coupling 604 (instead of the metallic coupling 104 shown in FIG. 3) and a composite body 602 (instead of the composite body 102 shown in FIG. 2B). The metallic coupling 604 is substantially similar to the metallic coupling 104 shown in FIG. 3. Further, the composite body 602 is substantially similar to the composite body 102 shown in FIG. 2B.

However, in the hybrid transmission component 600, the circumferential surface 114 is an outer circumferential surface 114o of the metallic coupling 604. Further, in the hybrid transmission component 600, the composite body 602 is at least partially received on the outer circumferential surface 114o. Therefore, in the embodiment of FIG. 10, the metallic coupling 604 is a male spline toothed arrangement, and the composite body 602 is a female arrangement. In such applications, the metallic coupling 604 is disposed in a bore 610 of the composite body 602 to assemble the hybrid transmission component 600.

It will be understood that the invention is not limited to the embodiments above described and various modifications and improvements can be made without departing from the concepts described herein. Except where mutually exclusive, any of the features may be employed separately or in combination with any other features and the invention extends to and includes all combinations and sub-combinations of one or more features described herein.

## Claims

1. A hybrid transmission component (100, 200, 300, 350, 400, 500, 600) for a gas turbine engine (10), the hybrid transmission component (100, 200, 300, 350, 400, 500, 600) comprising:
a composite body (102, 402, 502, 602); and
a metallic coupling (104, 304, 354, 404, 504, 604) joined with the composite body (102, 402, 502, 602) and defining a longitudinal axis (106) along its length, the metallic coupling (104, 304, 354, 404, 504, 604) comprising an axial end surface (112), a circumferential surface (114) circumferentially extending about the longitudinal axis (106), and a plurality of spline teeth (120) extending from the circumferential surface (114) and angularly separated from each other about the longitudinal axis (106), wherein each spline tooth (120) from the plurality of spline teeth (120) comprises a root (122) disposed adjacent to the circumferential surface (114), a tip (124) distal to the circumferential surface (114), and a leading end (126) disposed proximal to the axial end surface (112), wherein each spline tooth (120) extends radially from the root (122) to the tip (124) with respect to the longitudinal axis (106), wherein each spline tooth (120) extends axially from the leading end (126) along the longitudinal axis (106), the leading end (126) of each spline tooth (120) comprising a curved surface (128) extending from the root (122) and a planar surface (130) extending from the curved surface (128) to the tip (124), wherein the curved surface (128) curves inwardly from the root (122) away from the axial end surface (112), such that the curved surface (128) is concave with respect to the axial end surface (112), wherein the planar surface (130) is inclined obliquely to the longitudinal axis (106) by a rake angle (α), wherein, during joining of the composite body (102, 402, 502, 602) with the metallic coupling (104, 304, 354, 404, 504, 604), the composite body (102, 402, 502, 602) is moved relative to the metallic coupling (104, 304, 354, 404, 504, 604) in a joining direction (108) that extends away from the axial end surface (112) along the longitudinal axis (106), and wherein the leading end (126) of each spline tooth (120) is configured to cut the composite body (102, 402, 502, 602) during joining of the composite body (102, 402, 502, 602) with the metallic coupling (104, 304, 354, 404, 504, 604).

2. The hybrid transmission component (100, 200, 300, 350, 400, 500, 600) of claim 1, wherein the curved surface (128) is a circular arc (A1) having a transition radius (R).

3. The hybrid transmission component (100, 200, 300, 350, 400, 500, 600) of claim 1 or 2, wherein the metallic coupling (104, 304, 354, 404, 504, 604) further comprises a chamfered surface (132) extending between the axial end surface (112) and the circumferential surface (114), such that the curved surface (128) of the leading end (126) of each spline tooth (120) extends from the chamfered surface (132), and wherein the chamfered surface (132) is inclined obliquely to the longitudinal axis (106) by a lead angle (β).

4. The hybrid transmission component (100, 200, 300, 350, 400, 500, 600) of claim 3, wherein the lead angle (β) is from 30 degrees to 45 degrees.

5. The hybrid transmission component (100, 200, 300, 350, 400, 500, 600) of any preceding claim, wherein the rake angle (α) is from 55 degrees to 85 degrees.

6. The hybrid transmission component (100, 200, 300, 350, 400, 500, 600) of any preceding claim, wherein each spline tooth (120) tapers from the root (122) to the tip (124).

7. The hybrid transmission component (100, 200, 300, 350, 400, 500, 600) of any preceding claim, wherein the root (122) of each spline tooth (120) forms an interference fit with the composite body (102, 402, 502, 602).

8. The hybrid transmission component (300, 350) of any preceding claim, wherein the metallic coupling (304, 354) further comprises a main body (110) forming the circumferential surface (114) and the axial end surface (112), such that each spline tooth (120) is disposed on the main body (110), and wherein each spline tooth (120) at least partially defines at least one groove (305) that extends from the tip (124) of the spline tooth (120), beyond the root (122) of the spline tooth (120), into the main body (110) of the metallic coupling (304, 354).

9. The hybrid transmission component (350) of claim 8, wherein the at least one groove (305) comprises a plurality of grooves (305) axially spaced apart from each other with respect to the longitudinal axis (106).

10. The hybrid transmission component (350) of claim 9, wherein an axial distance (D1) between adjacent grooves (305) from the plurality of grooves along the longitudinal axis (106) progressively increases along the joining direction (108).

11. The hybrid transmission component (400, 500) of any one of claims 1 to 7, wherein each spline tooth (120) comprises at least one spline groove (405) that extends from the tip (124) of the spline tooth (120) to the root (122) of the spline tooth (120), and wherein the composite body (402, 502) comprises at least one body groove (410) that is aligned with the at least one spline groove (405) of each spline tooth (120) after the composite body (402, 502) is joined with the metallic coupling (404, 504).

12. The hybrid transmission component (500) of claim 11, wherein the at least one spline groove (405) comprises a plurality of spline grooves (405) axially spaced apart from each other with respect to the longitudinal axis (106), wherein the at least one body groove (410) comprises a plurality of body grooves (410) corresponding to the plurality of spline grooves (405), and wherein each body groove (410) is aligned with a corresponding spline groove (405) from the plurality of spline grooves (405) after the composite body (502) is joined with the metallic coupling (504).

13. The hybrid transmission component (200) of any preceding claim, wherein the metallic coupling (104) further comprises an overhang portion (202) axially extending from the axial end surface (112) along the longitudinal axis (106) opposite to the joining direction (108), wherein the overhang portion (202) comprises an overhang end surface (204) distal to the axial end surface (112), and wherein each spline tooth (120) extends axially along the overhang portion (202), such that the leading end (126) of each spline tooth (120) is disposed adjacent to the overhang end surface (204).

14. The hybrid transmission component (100, 200, 300, 350, 400, 500) of any preceding claim, wherein the metallic coupling (104, 304, 354, 404, 504) is annular, such that the circumferential surface (114) is a radially inner circumferential surface (114i) of the metallic coupling (104, 304, 354, 404, 504), and wherein the composite body (102, 402, 502) is at least partially received within the radially inner circumferential surface (114i).

15. A gas turbine engine (10) that includes a hybrid transmission component (100, 200, 300, 350, 400, 500, 600) of any preceding claim
